(19) Europäisches Patentamt
European Patent Office
Office européen des brevets

(11) **EP 1 890 132 A1**

(12) **EUROPÄISCHE PATENTANMELDUNG**

(43) Veröffentlichungstag:
**20.02.2008 Patentblatt 2008/08**

(51) Int Cl.:
**G01N 21/86** (2006.01)

(21) Anmeldenummer: **06017021.4**

(22) Anmeldetag: **16.08.2006**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(71) Anmelder: **F.HOFFMANN-LA ROCHE AG**
**4070 Basel (CH)**

(72) Erfinder: **Die Erfindernennung liegt noch nicht vor**

(74) Vertreter: **Bittner, Thomas L.**
**Forrester & Boehmert**
**Pettenkoferstrasse 20-22**
**80336 München (DE)**

(54) **Verfahren zum Untersuchen einer Probe einer Flüssigkeit**

(57) Die Erfindung betrifft ein Verfahren zum Untersuchen einer Probe einer Flüssigkeit, insbesondere einer Probe einer Körperflüssigkeit, bei dem infolge eines Beladens eines Testsystems mit einer Probe einer Flüssigkeit die Probe der Flüssigkeit in eine Messzone (2) des Testsystems gelangt und sich in der Messzone (2) ausbreitet und bei dem ein die Ausbreitung der Probe der Flüssigkeit in der Messzone (2) charakterisierendes Füllmaß unter Verwendung einer photometrischen Füllmessung der Probe der Flüssigkeit in der Messzone (2) ermittelt wird, wobei die photometrische Füllmessung mit auf die Probe der Flüssigkeit in der Messzone (2) eingestrahltem Messlicht (5a) einer Messlichtwellenlänge ausgeführt wird, für die die Flüssigkeit bei Variation mindestens eines Flüssigkeitsparameters ein im wesentlichen gleich bleibendes optisches Verhalten aufweist, welches durch zumindest eine spektroskopische Messgröße ausgewählt aus der folgenden Gruppe von spektroskopischen Messgrößen bestimmt wird: Absorption, Transmission, Remission und Fluoreszenz.

Fig. 1

**Beschreibung**

Die Erfindung bezieht sich auf ein Verfahren zum Untersuchen einer Probe einer Flüssigkeit, insbesondere einer Probe einer Körperflüssigkeit.

Hintergrund der Erfindung

Proben von Flüssigkeiten werden zu verschiedenen Analysezwecken in unterschiedlichen Anwendungen untersucht, beispielsweise um einen Analyt in der Flüssigkeit zu bestimmen. Zu den Flüssigkeiten, die in dieser Art und Weise analysiert werden, gehören insbesondere Körperflüssigkeiten wie Urin und Blut.

Gemäß einer bekannten Technologie werden zum Bestimmen eines Analyts in der Probe einer Flüssigkeit Testsysteme verwendet, in denen eine Detektionszone gebildet ist, d. h. ein Bereich des Testsystems, in welchem die Probe der Flüssigkeit eingebracht wird, um dann den Analyt zu bestimmen. Solche Testsysteme sind einerseits als so genannte Teststreifen, bei denen in einer Ausführungsform ein Verbund mehrerer Vliesmaterialabschnitte verwendet wird, und andererseits als Testsysteme mit einer räumlichen Hohlraumstruktur bekannt.

Beispielsweise ist ein solches Testsystem in der Ausführung als Teststreifen in dem Dokument US 6,707,554 B1 beschrieben. Bei dem bekannten Testsystem wird die Probe der Flüssigkeit in der Detektionszone photometrisch untersucht, d. h. Licht wird auf die Probe der Flüssigkeit eingestrahlt, und anschließend werden eine oder mehrere spektroskopische Messgrößen mit Hilfe einer Detektoreinrichtung erfasst, insbesondere das Absorptionsverhalten, das Transmissionsverhalten oder das Remissionsverhalten der Probe der Flüssigkeit in der Detektionszone. Auf Basis der gemessenen spektroskopischen Messgröße können dann ein oder mehrere Analyte in der Probe der Flüssigkeit bestimmt werden.

Um die Menge an Flüssigkeit, welche für die Untersuchung in dem Testsystem bereitgestellt werden muss, möglichst gering zu halten, wird in dem Dokument US 6,707,554 B1 ein Messprozess vorgeschlagen, bei dem die Probe der Flüssigkeit auf ihrem Ausbreitungsweg entlang des Testsystems zunächst die Detektionszone füllt, was durch Benetzung und / oder Befeuchtung erfolgt, und anschließend in eine Mess- oder Kontrollzone gelangt, die der Detektionszone in dem Testsystem in Ausbreitungsrichtung der Probe der Flüssigkeit nachgeschaltet ist. Die Messzone wird mit Hilfe von Messlicht aus einer zweiten Lichtquelle photometrisch untersucht. Erst wenn aufgrund der photometrischen Untersuchung der Messzone davon ausgegangen werden kann, dass die Probe der Flüssigkeit in die Messzone gelangt ist und somit vorher den Bereich der Detektionszone gefüllt hat, wird die photometrische Messung für die Untersuchung der Probe der Flüssigkeit in der Detektionszone gestartet. Wenn die Ankunft der Probe der Flüssigkeit in der Messzone mittels der photometrischen Messung registriert wird, kann auch das Beladen des Testsystems mit der Flüssigkeit beendet werden. Auf diese Weise wird vermieden, dass unnötig viel Flüssigkeitsmenge auf das Testsystem aufgebracht wird.

Die Detektionszone und die Messzone sind bei dem bekannten Testsystem getrennt gebildet, weisen jedoch eine räumliche Nähe zueinander auf. Für die jeweilige photometrische Messung werden die Detektionszone mit Detektionslicht und die Messzone mit Messlicht aus unterschiedlichen Lichtquellen ortsaufgelöst bestrahlt, d. h. das Messlicht für die photometrische Messung der Messzone gelangt im wesentlichen auch nur in den Bereich der Messzone und nicht in den Bereich der Detektionszone und umgekehrt. Diese ortsaufgelöste Bestrahlung wird mit Hilfe eines optischen Abbildungssystems, bei dem es sich beispielsweise um ein oder mehrere optische Linsen handeln kann, erreicht, das zwischen dem Testsystem und den Lichtquellen angeordnet ist. Das optische Abbildungssystem verkompliziert den Messaufbau und vergrößert auch den Platzbedarf für die Messanordnung.

In dem Dokument US 4,420,566 ist weiterhin ein Verfahren zum Detektieren einer Probenflüssigkeit beschrieben, bei dem die Benetzung / Befeuchtung eines Probenbereiches durch die Probenflüssigkeit gemessen wird, indem die Menge an reflektiertem Licht gemessen wird, die von dem Probenbereich zurückgeworfen wird.

Zusammenfassung der Erfindung

Aufgabe der Erfindung ist es, ein verbessertes Verfahren zum Untersuchen einer Probe einer Flüssigkeit, insbesondere einer Probe einer Körperflüssigkeit, zu schaffen, welches mit vermindertem Aufwand durchführbar ist. Unter Beibehaltung einer hohen Sensitivität der Untersuchung sollen gegenüber dem Stand der Technik Material und Kosten eingespart werden.

Diese Aufgabe wird erfindungsgemäß durch ein Verfahren zum Untersuchen einer Probe einer Flüssigkeit, insbesondere einer Probe einer Körperflüssigkeit, gelöst, bei dem infolge eines Beladens eines Testsystems mit einer Probe einer Flüssigkeit die Probe der Flüssigkeit in eine Messzone des Testsystems gelangt und sich in der Messzone ausbreitet und bei dem ein die Ausbreitung der Probe der Flüssigkeit in der Messzone charakterisierendes Füllmaß unter Verwendung einer photometrischen Füllmessung der Probe der Flüssigkeit in der Messzone ermittelt wird, wobei die photometrische Füllmessung mit auf die Probe der Flüssigkeit in der Messzone eingestrahltem Messlicht einer Messlichtwellenlänge ausgeführt wird, für die die Flüssigkeit bei Variation mindestens eines Flüssigkeitsparameters ein im wesentlichen gleich bleibendes optisches Verhalten aufweist, welches durch zumindest eine spektroskopischen Messgröße ausgewählt aus der folgenden Gruppe von spektroskopischen Messgrößen bestimmt wird: Absorption, Transmission, Remission und Fluoreszenz.

Wellenlängen, bei denen das Verhalten einer spektroskopischen Messgröße für eine zu untersuchende Flüssigkeit im wesentlichen unabhängig von der Variation mindestens eines Flüssigkeitsparameters ist, sind im Wellenlängenspektrum der spektroskopischen Messgröße für die Flüssigkeit einem charakteristischen Punkt zugeordnet, welcher auch als isobestischer oder isosbestischer Punkt bezeichnet wird. Die für die photometrische Füllmessung der Messzone verwendete Messlichtwellenlänge kann in Analogie hierzu auch als iso(s)bestische Messlichtwellenlänge benannt werden. Die Unabhängigkeit der spektroskopischen Messgröße bei der Messlichtwellenlänge ermöglicht es, die im Rahmen der photometrischen Füllmessung erfassten Messsignale als Maß für einen Füllgrad der Messzone auszuwerten, nämlich dem Umfang, in welchem die Messzone mit der Probe der Flüssigkeit ausgefüllt ist.

Mit Hilfe des vorgeschlagenen Verfahrens ist es ermöglicht, auf material- und kostenaufwändige optische Abbildungssysteme in der Messanordnung zum Untersuchen des Testsystems zu verzichten, da eine ortsaufgelöste Untersuchung von Detektionszone und Messzone nicht länger notwendig ist. Es muss keine saubere räumliche Trennung der Einstrahlbereiche für das Messlicht zur photometrischen Untersuchung der Messzone einerseits und das Detektionslicht, nämlich dem Licht für die Untersuchung der Detektionszone, andererseits verlangt werden. Genau dieses ist bei Verzicht auf das optische Abbildungssystem auch kaum realisierbar. Trotzdem ist mit Hilfe des vorgeschlagenen Verfahrens aufgrund der gezielten Wahl der Messlichtwellenlänge für das Messlicht der photometrischen Untersuchung der Messzone eine zuverlässige Bestimmung des Füllgrades der Messzone sichergestellt.

Aber nicht nur bei der Nutzung einer photometrischen Untersuchung der Detektionszone ist eine zuverlässige Information über den Grad der Füllung der Messzone durch die Probe der Flüssigkeit von Bedeutung. Die Füllung der Meßzone erfolgt bevorzugt durch eine im wesentlichen flächige Verteilung der Probe der Flüssigkeit in der Messzone. Auch wenn die Probe der Flüssigkeit mit anderen Verfahren analysiert wird, beispielsweise anderen physikalischen Methoden, einer elektrochemischen Methode oder anderen chemischen Methoden, ist die Information über das Füllmaß eine wesentliche Kenngröße zur exakten Auswertung der Messergebnisse, insbesondere, wenn die Dicke der Probenzone vernachlässigbar gegenüber der Fläche ist. Unter Verwendung der Information über das Füllmaß können beispielsweise Erkenntnisse darüber gewonnen werden, welches Volumen der Probe der Flüssigkeit analysiert wurde. Dieses ist insbesondere dann von besonderer Bedeutung, wenn die Messzone und die Detektionszone zumindest teilweise überlappend in dem Testsystem gebildet sind. Es kann auch vorgesehen sein, dass die Messzone und die Detektionszone identisch sind. Allgemein ist mit dem vorgeschlagenen Verfahren eine Möglichkeit geschaffen, den Grad der Befüllung eines Bereiches mit der Probe der Flüssigkeit zu ermitteln, unabhängig davon, zu welchen Zwecken diese Information dann verwendet wird.

Eine bevorzugte Weiterbildung der Erfindung sieht vor, dass die Messzone beim Ausbreiten der Probe der Flüssigkeit in der Messzone durch die Flüssigkeit benetzt wird. Unter Benetzen wird allgemein das Ausbilden einer Grenzfläche zwischen der Flüssigkeit und einem Festkörpermaterial verstanden. Bei einer zweckmäßigen Ausgestaltung der Erfindung kann vorgesehen sein, dass die Messzone beim Ausbreiten der Probe der Flüssigkeit in der Messzone durch die Flüssigkeit befeuchtet wird. Eine Benetzung einerseits und eine Befeuchtung andererseits können beim Füllen der Messzone mit der Probe der Flüssigkeit jeweils ausschließlich oder kombiniert auftreten. Handelt es sich bei dem Material, in welchem die Messzone gebildet ist, zum Beispiel um ein die Flüssigkeit nicht aufnehmendes Material, so wird die Benetzung zum Ausfüllen der Messzone führen. Ist in der Messzone aber auch ein Abschnitt mit einem saugfähigen Material gebildet, so kann es beim Füllen der Messzone zur so genannten Befeuchtung dieses Materials kommen, was gelegentlich auch als Spezialfall der Benetzung betrachtet wird, da hierbei in der Regel innere Oberflächen eines Materials benetzt werden.

Eine vorteilhafte Ausführungsform der Erfindung sieht vor, dass die photometrische Füllmessung mit Messlicht einer Messlichtwellenlänge ausgeführt wird, für die die Flüssigkeit bei Variation der chemischen Zusammensetzung der Flüssigkeit lösbaren Verbindung ein im wesentlichen gleich bleibendes optisches Verhalten aufweist, welches durch zumindest eine spektroskopischen Messgröße ausgewählt aus der folgenden Gruppe von spektroskopischen Messgrößen bestimmt wird: Absorption, Transmission, Remission und Fluoreszenz. Die chemische Zusammensetzung der Flüssigkeit kann sich auf unterschiedliche Art und Weise ändern. Beispielsweise kann in der Flüssigkeit nach und nach ein Reaktionsprodukt gebildet werden, sodass das Reaktionsprodukt in zunehmendem Umfang in der Probe der Flüssigkeit vorliegt.

Bevorzugt sieht eine Fortbildung der Erfindung vor, dass die photometrische Füllmessung mit Messlicht einer Messlichtwellenlänge ausgeführt wird, für die die Flüssigkeit bei Variation der Konzentration einer in der Flüssigkeit lösbaren Verbindung ein im wesentlichen gleich bleibendes optisches Verhalten aufweist, welches durch zumindest eine spektroskopischen Messgröße ausgewählt aus der folgenden Gruppe von spektroskopischen Messgrößen bestimmt wird: Absorption, Transmission, Remission und Fluoreszenz. Beispielsweise ändert sich das Verhalten für eine spektroskopische Messgröße, insbesondere die Remission, einer wässrigen Glukoselösung nur unwesentlich für unterschiedliche Glukosekonzentrationen für Licht bestimmter Wellenlängen.

Bei einer vorteilhaften Ausgestaltung der Erfindung kann vorgesehen sein, dass die photometrische Füllmessung zeitaufgelöst ausgeführt wird.

Eine Weiterbildung der Erfindung kann vorsehen, dass ein zeitlicher Verlauf der zumindest einen spektroskopischen Messgröße gemessen wird.

Eine bevorzugte Weiterbildung der Erfindung sieht vor, dass ein zeitlicher Verlauf für das Füllmaß ermittelt wird.

Bei einer zweckmäßigen Ausgestaltung der Erfindung kann vorgesehen sein, dass das Füllmaß aus Messwerten für die zumindest eine spektroskopische Messgröße ermittelt wird, die zu einem benutzerdefinierbaren Zeitpunkt nach einem Beginn des Einstrahlens des Messlichtes mit der Messlichtwellenlänge gemessen werden. Mittels Wahl eines benutzerdefinierten Zeitpunktes kann ein für die Ermittlung des Füllmaßes besonders geeigneter Messpunkt auf der Kurve des zeitlichen Verlaufes der untersuchten spektroskopischen Messgröße nach dem Einstrahlen des Messlichtes mit der Messlichtwellenlänge ausgewählt werden. Hierdurch kann beispielsweise darauf reagiert werden, wie sich das Signal-Rausch-Verhältnis beim Erfassen der spektroskopischen Messgröße eventuell im Verlauf der photometrischen Untersuchung ändert. Es kann ein Messpunkt gewählt werden, für den das Signal-Rausch-Verhältnis besonders vorteilhaft ist.

Eine bevorzugte Ausführungsform der Erfindung sieht vor, dass als benutzerdefinierter Zeitpunkt ein Zeitpunkt gewählt wird, in dem die zumindest eine spektroskopische Messgröße einen Extremwert annimmt. Ein geeigneter Extremwert ist beispielsweise ein Minimum der spektroskopischen Messgröße im zeitlichen Verlauf nach dem Einstrahlen des Messlichtes. Aber auch ein Maximum des Kurvenverlaufes kann verwendet werden.

Bevorzugt sieht eine Fortbildung der Erfindung vor, dass als Testsystem ein System verwendet wird, welches zumindest eine Testsystembauart ausgewählt aus der folgenden Gruppe von Testsystembauarten implementiert: Teststreifen, Testfeld, Testsystem mit einer Hohlraumstruktur zum Aufnehmen der Probe der Flüssigkeit und mikrofluidisches Testsystem. Das Verfahren kann für Testsysteme in unterschiedlichsten Testsystembauarten genutzt werden, zum Beispiel auf der Basis von gewebten Netzen, Vlies, Papier, Film, Mikrostrukturen oder dergleichen. Hierzu gehören insbesondere Teststreifen, die üblicherweise als Streifen mit einem Verbund von Vliesmaterialien ausgeführt sind. Anderer Testsysteme verfügen über eine Hohlraumstruktur in einem Basiskörper, der zum Beispiel als Spritzgussbauteil hergestellt wird. In der Hohlraumstruktur sind verschiedene Zonen gebildet, die zur Untersuchung der Probe der Flüssigkeit nutzbar sind. Hierzu gehören neben der Messzone beispielsweise eine Reagenzzone, in der ein oder mehrere Reagenzien angeordnet sind, die insbesondere mit einem von der Flüssigkeit umfassten Analyt reagieren können, oder eine Reaktionszone, in welcher die Reaktion zwischen dem einen oder den mehreren Reagenzien mit dem Analyt der Flüssigkeit stattfindet. Ein oder mehrere Zonen können räumlich überlappend gebildet sein, sowohl in den Teststreifen als auch in den Testsystemen mit der Hohlraumstruktur. Mikrofluidische Testsysteme haben insbesondere den Vorteil, dass das benötigte Volumen der Probe der Flüssigkeit weiter minimiert werden kann.

Bei einer vorteilhaften Ausgestaltung der Erfindung kann vorgesehen sein, dass eine Analysemessung zum Analysieren der Probe der Flüssigkeit ausgeführt wird, bei dem wahlweise ein Analyt in der Probe der Flüssigkeit bestimmt wird. Ergänzend zu der photometrischen Füllmessung ist in dieser Ausgestaltung eine Analysenmessung vorgesehen, bei der die Probe der Flüssigkeit analysiert wird. Die Analyse kann beispielsweise darin bestehen, einen Analyten in der Probe der Flüssigkeit zu bestimmen. Aber auch das Erfassen anderer physikalischer oder chemischer Eigenschaften der Probe der Flüssigkeit in dem Testsystem kann alternativ oder ergänzend zu der Bestimmung des Analyts vorgesehen sein. Hierzu sind unterschiedliche Meßmethoden nutzbar.

Eine Weiterbildung der Erfindung kann vorsehen, dass die Analysemessung eine Messung ausgewählt aus der folgenden Gruppe von Messungen umfasst: elektrochemische Messung und photometrische Messung.

Eine bevorzugte Weiterbildung der Erfindung sieht vor, dass die Analysemessung in Abhängigkeit von einem Füllmaß-Datensignal gestartet wird, welches aus einer elektronisch auswertbaren Information über das ermittelte Füllmaß abgeleitet wird. Das Füllmaß-Datensignal kann zum Beispiel dazu genutzt werden, eine Information über den Füllgrad der Messzone auf einem Bildschirm der Messanordnung zur Information des Benutzers anzuzeigen. Alternativ und ergänzend ist die Nutzung des Füllmaß-Datensignals auch für ergänzende Messdatenauswertungen möglich.

Bei einer zweckmäßigen Ausgestaltung der Erfindung kann vorgesehen sein, dass die Analysemessung gemäß zumindest einer Messverfahrensgestaltung ausgewählt aus der folgenden Gruppe von Messverfahrensgestaltungen ausgeführt wird: zumindest teilweise zeitlich überlappend mit der photometrischen Füllmessung, beginnend vor der photometrischen Füllmessung, beginnend nach der photometrischen Füllmessung, endend vor der photometrischen Füllmessung und endend nach der photometrischen Füllmessung. Die photometrische Füllmessung und die Analysemessung können in Abhängigkeit von der konkreten Messanordnung und einem gewählten Messregime in beliebiger zeitlicher Relation zueinander ausgeführt werden. Auch eine mehrfache Wiederholung der photometrischen Füllmessung kann vorgesehen sein, beispielsweise vor, während und nach der Analysemessung. Hierdurch kann fortdauernd der Füllgrad der Messzone überwacht werden.

Eine vorteilhafte Ausführungsform der Erfindung sieht vor, dass die Analysemessung in einer von der Messzone beabstandeten Detektionszone des Testsystems ausgeführt wird, die der Messzone wahlweise nachgeschaltet ist. Bei dieser Ausgestaltung ist es von Vorteil, wenn in einer möglichen Ausführungsform die Information über das Füllmaß genutzt wird, um die Analysemessung zu starten. Hierbei kann die Information über das Füllmaß in der Messzone als Indikator für das Füllen der Detektionszone herangezogen werden. Alternativ zu der vorgenannten Ausführung können Messzone und Detektionszone auch zumindest teilweise räumlich überlappend gebildet sein oder sogar identisch sein.

Beschreibung bevorzugter Ausführungsbeispiele der Erfindung

Die Erfindung wird im folgenden anhand von Ausführungsbeispielen unter Bezugnahme auf Figuren einer Zeichnung näher erläutert. Hierbei zeigen:

Fig. 1   eine schematische Darstellung einer Messanordnung zum Untersuchen einer Probe einer Flüssigkeit;
Fig. 2   eine graphische Darstellung eines zeitlichen Verlaufes der Remission bei einer Messlichtwellenlänge von 490nm für Blutproben mit verschiedenen Glukosekonzentrationen;
Fig. 3   eine graphische Darstellung eines zeitlichen Verlaufes der Remission bei einer Wellenlänge von 650nm für Blutproben mit verschiedenen Glukosekonzentrationen;
Fig. 4   eine graphische Darstellung von berechneten Werten für einen zeitlichen Verlauf der Remission für unterschiedliche Füllgrade einer Messzone; und
Fig. 5   eine graphische Darstellung der zeitlichen Ableitung der berechneten Werte in Fig. 4.

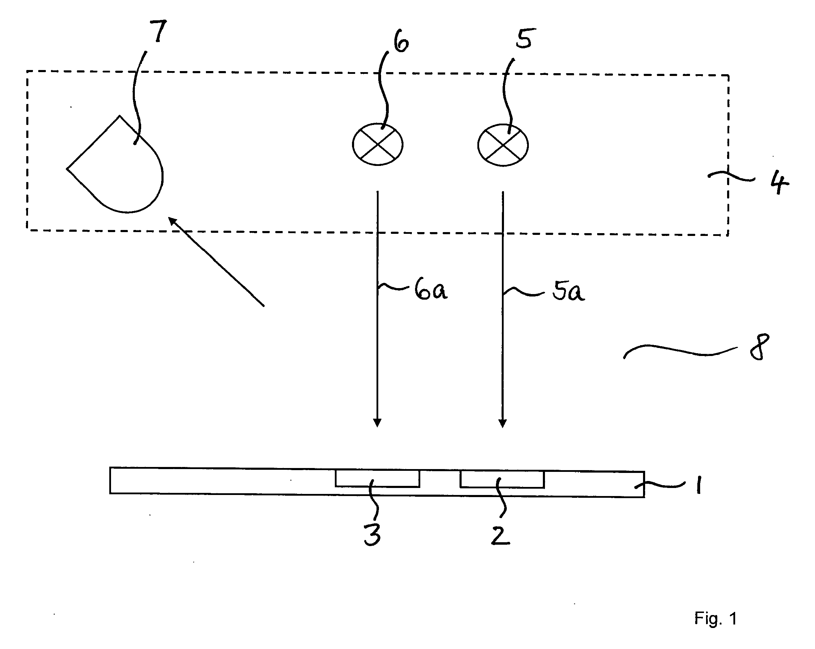

Fig. 1 zeigt eine schematische Darstellung einer Messanordnung zum Untersuchen einer Probe einer Flüssigkeit in einem Testsystem. Bei dem Testsystem sind in einer Testfeldebene 1 eine Messzone 2 sowie eine der Messzone 2 nachgeschaltete Detektionszone 3 gebildet. Der Testfeldebene 1 gegenüberliegend ist eine photometrische Messeinrichtung 4 angeordnet, die über eine erste Lichtquelle 5 sowie eine zweite Lichtquelle 6 und einen den beiden Lichtquellen 5, 6 zugeordneten Detektor 7 verfügt. Der Detektor 7 ist vorzugsweise mittels eine Photodiode gebildet. Ein Bereich 8 zwischen der Testfeldebene 1 und der photometrischen Messeinrichtung 4 ist frei von optischen Abbildungssystemen wie Linsen. Mit Hilfe der ersten Lichtquelle 5, bei der es sich beispielsweise um eine einfarbige Leuchtdiode handelt, wird Messlicht 5a mit einer Messlichtwellenlänge erzeugt und auf die Testfeldebene 1 so eingestrahlt, dass zumindest die Messzone 2 erfasst ist. Von der zweiten Lichtquelle 6, die ebenfalls als eine einfarbige Leuchtdiode ausgeführt ist, wird Detektionslicht 6a mit einer Detektionslichtwellenlänge erzeugt und ebenfalls auf die Testfeldebene 1 eingestrahlt, sodass zumindest die Detektionszone 3 hiervon erfasst ist. Um die Bereiche zu begrenzen, über welche sich das Messlicht 5a und das Detektionslicht 6a in der Testfeldebene 1 ausbreiten, wahlweise zu begrenzen, können einfache Blenden (nicht dargestellt) wie Lochblenden verwendet werden.

Zum Durchführen einer Untersuchung einer Probe einer Flüssigkeit wird diese in der Testfeldebene 1 auf das Testsystem geladen, so dass die Probe der Flüssigkeit zunächst in die Messzone 2 und anschließend in die Detektionszone 3 gelangt. Die Ausbreitung der Probe der Flüssigkeit in dem Testsystem erfolgt beispielsweise getrieben durch Kapillarkräfte. Aber auch eine aktive Verteilung der Probe der Flüssigkeit in dem Testsystem mittels einer Mikropumpe kann vorgesehen sein. Das von der Probe der Flüssigkeit in der Messzone 2 und der Detektionszone 3 üblicherweise diffus reflektierte Licht (Remission) wird dann mit dem Detektor 7 erfasst. Um die Messsignale für das Messlicht 5a einerseits und das Detektionslicht 6a andererseits zu separieren, können Farbfilter (nicht dargestellt) dem Detektor 7 vorgeschaltet werden, die an die Messlichtwellenlänge und die Detektionslichtwellenlänge angepasst sind. Hierfür sind besonders schmalbandige Farbfilter geeignet.

Mit dem Detektor 7 kann Licht erfasst werden, welches von der Probe der Flüssigkeit in der Messzone 2 und der Detektionszone 3 zurückgeworfen wird. In Ergänzung oder alternativ hierzu kann bei den photometrischen Untersuchungen selbstverständlich auch durch die Messzone 2 und die Detektionszone 3 transmittiertes Licht gemessen werden. Je nach Anwendungsfall kann der Fachmann sich Lichtanteile auswählen, die für die aus den Untersuchungen zu ermittelnden Informationen in geeigneter Weise auswertbar sind.

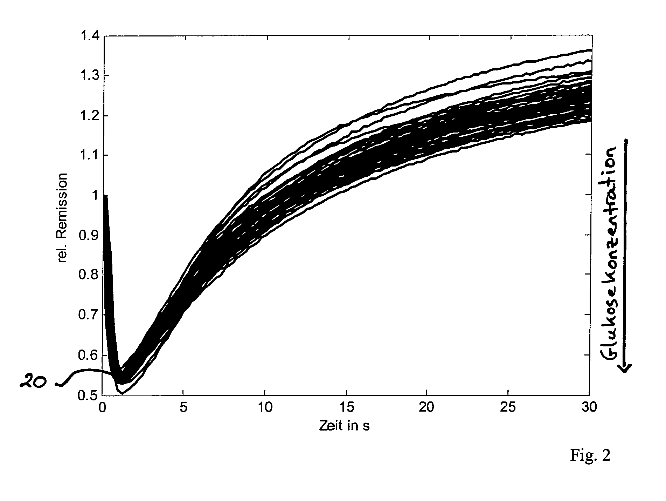

Fig. 2 zeigt eine graphische Darstellung eines zeitlichen Verlaufes der Remission bei einer Messlichtwellenlänge von 490nm für Blutproben mit verschiedenen Glukosekonzentrationen zwischen 25mg/dl und 600mg/dl.

Es ergibt sich, dass das Remissionsverhalten der Blutproben im wesentlichen unabhängig von der Glukosekonzentration ist, insbesondere im Bereich eines Minimums 20 des zeitlichen Verlaufes der Remission bei 490nm. Das Minimum 20 wird etwa ein bis zwei Sekunden nach dem Beginn der Benetzung erreicht. Anschließend tritt ein Ausbleicheffekt auf, der zu einer Zunahme des Remissionssignals führt. Die in Fig. 2 dargestellten Kurvenverläufe stellen so genannte Iso(s)besten dar.

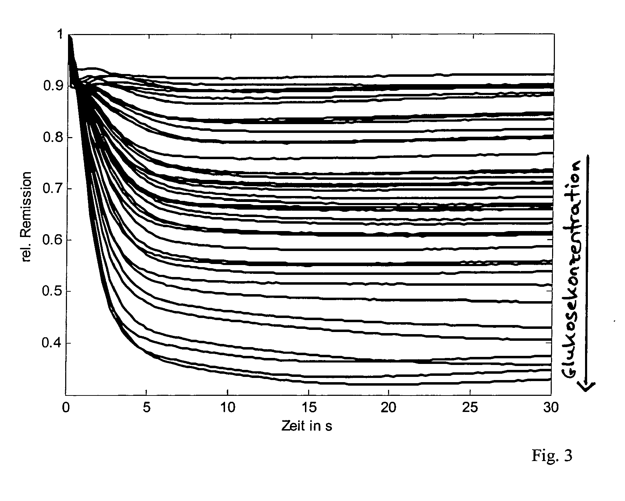

Fig. 3 zeigt eine graphische Darstellung eines zeitlichen Verlaufes der Remission bei einer Wellenlänge von 650nm für Blutproben mit verschiedenen Glukosekonzentrationen. Die Glukosekonzentration wurde vergleichbar zu den in Fig. 2 dargestellten Untersuchungen zwischen 25mg/dl und 600mg/dl variiert. Es ist ohne weiteres erkennbar, dass bei der Wellenlänge von 650nm sich das Ausmaß der Remission für die Blutproben mit unterschiedlichen Glukosekonzentrationen jeweils unterscheidet, auch wenn ein ähnlicher zeitlicher Verlauf gemessen wird.

Photometrische Messungen bei einer Messlichtwellenlänge von etwa 490nm, wie sie in Fig. 2 für Blutproben mit verschiedenen Glukosekonzentrationen dargestellt sind, können nun genutzt werden, um den Grad zu bestimmen, in welchem Umfang die Messzone 2 mit der zu untersuchenden Blutprobe befüllt ist, sei es durch Benetzen und / oder Befeuchten. Nachfolgend wird die hierfür genutzte Auswertung zum Ermitteln eines Füllmaßes für das Ausfüllen der Messzone 2 durch die Flüssigkeit näher erläutert. Allgemein werden hierbei die experimentell ermittelten Messdaten mit berechneten Modelldaten verglichen, um so das Füllmaß zu ermitteln.

Aus den experimentellen Untersuchungen ergibt sich, dass der Verlauf einer absoluten Remission R(t) näherungsweise gut durch einen exponentiellen Anstieg mit einem folgenden exponentiellen Abfall beschrieben werden kann. Allgemein formuliert ergibt sich dann folgender Zusammenhang für die Vollbenetzung:

$$R(t) = a\left[1 - \exp\left(-\frac{t - t_1}{\tau_1}\right)\right] * \exp\left(-\frac{t - t_2}{\tau_2}\right) + \Delta$$

$\tau_1$ und $\tau_2$ sind zeitliche Konstanten, die die exponentiellen Verläufe des Anstiegs und des Abfalls charakterisieren. a ist eine Konstante. $\Delta$ ist ein Offset.

Bezogen auf einen Blankwert b = 1 wird der experimentell gemessene Kurvenverlauf mit folgenden Parametern gut beschrieben: $\Delta = 9$, $\tau_1 = 1$, $\tau_2 = 5$, a = 0,9, $t_2 = 0$ und $t_1 = \tau_1 \ln (1 - (b - \Delta) / a)$.

Falls der Bereich der Messzone 2 (vgl. Fig. 1) nur im Umfang eines Anteils c benetzt / befeuchtet wird, ergibt sich für die gemessene absolute Remission RT(t) der Teilbenetzung:

RT(t) = c * R(t) + (1 - c) * b.

Hierbei nimmt c je nach Grad des Ausfüllens der Messzone 2 Werte zwischen 0 und 1 an. Für die relative Remission r(t) ergibt sich sodann:

$$r(t) = \frac{RT(t)}{b}.$$

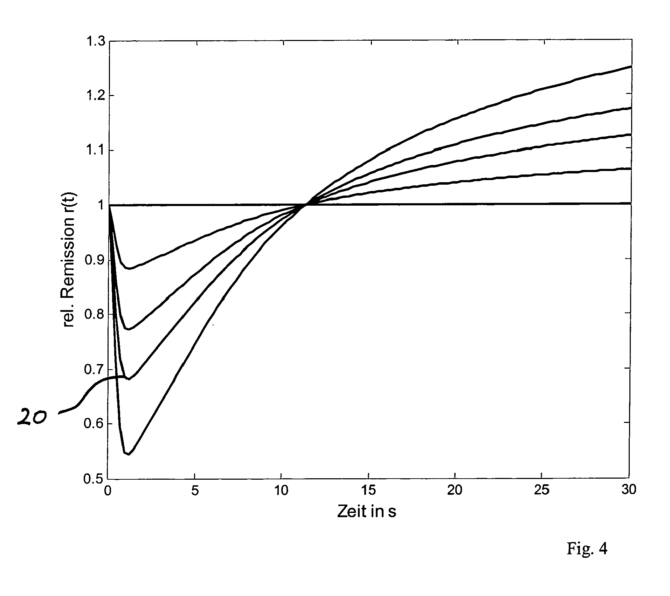

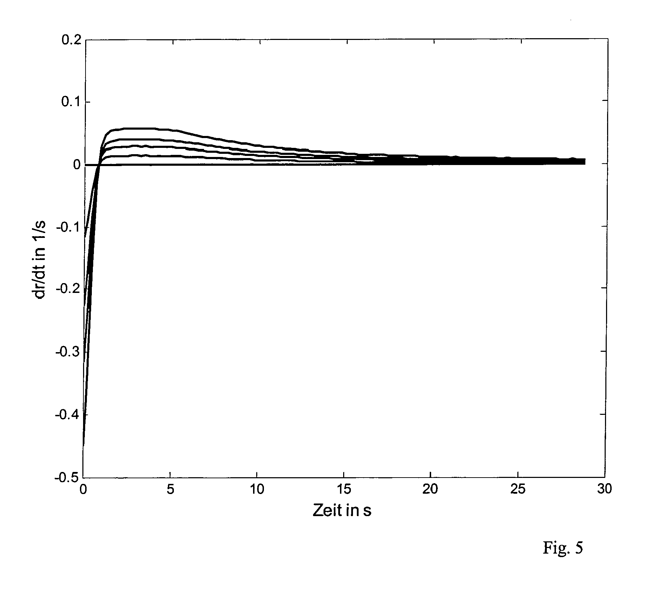

Ausgehend von den vorangehend beschriebenen Modellbetrachtungen wurden die in den Fig. 4 und 5 dargestellten zeitlichen Verläufe der Remission für verschiedenen Werte von c berechnet.

Fig. 4 zeigt eine graphische Darstellung von berechneten Werten für einen zeitlichen Verlauf der Remission für unterschiedliche Füllgrade einer Messzone, d. h. Benetzungs- und / oder Befeuchtungsgrade, die sich durch verschiedene Werte für c ausdrücken. In Abhängigkeit von c, d. h. in Abhängigkeit von dem Füllmaß, verändert sich der Wert des Minimums 20 für die verschiedenen Remissionskurven. Ein Vergleich der berechneten Kurvenverläufe mit experimentell ermittelten Messgrößen, die im Rahmen der photometrischen Füllmessung für die Messzone 2 ermittelt werden, erlaubt so die Ermittlung des Füllmaßes für die Messzone 2.

Fig. 5 zeigt eine graphische Darstellung der zeitlichen Ableitung für die Kurvenverläufe in Fig. 4. Der Nulldurchgang erfolgt für alle Kurven in einem Punkt, welcher dem Minimum 20 in der graphischen Darstellung in Fig. 4 entspricht.

Neben dem Wert für das Minimum 20 können auch andere Eigenschaften der Remissionsverläufe als Maß für den Grad des Füllens der Messzone 2 genutzt werden, beispielsweise Steigung oder Abfall der Remission. Hieraus können wahlweise auch Information über die Geschwindigkeit des Füllens der Messzone durch die Probe der Flüssigkeit abgeleitet werden.

Das Verfahren zum Bestimmen der Benetzung / Befeuchtung der Messzone wurde vorangehend anhand von Remissionsmessungen erläutert. In analoger Weise können Messdaten für die Transmission oder die Absorption ausgewertet werden, wenn diese bei einer geeigneten (isobestischen) Messlichtwellenlänge durchgeführt werden. Geeignete Messlichtwellenlängen können je nach Anwendungsfall aus Vorexperimenten bestimmt werden oder sind dem Fachmann für bestimmten chemische Zusammensetzung bekannt. In analoger Weise verhält es sich mit eventuellen Abhängigkeiten der Verläufe der spektroskopischen Messgröße bei der gewählten Messlichtwellenlänge von anderen Parametern, zum Beispiel der Temperatur oder der Luftfeuchtigkeit.

Mit dem beschriebenen Verfahren ist eine in beliebigen Messanordnungen vorteilhaft einsetzbare Möglichkeit geschaffen, den Füllgrad eines von einer Flüssigkeit einzunehmenden Bereiches, bevorzugt einer zu befeuchtenden oder zu benetzenden Fläche, zu ermitteln.

Messzone und Detektionszone können getrennt oder zumindest teilweise überlappend gebildet sein.

Aufgrund des integralen Charakters des erfindungsgemäßen Verfahrens weist es gegenüber den bekannten Verfahren, insbesondere den mit einer Beleuchtungs- und Abbildungsoptik arbeitenden Spot-Messungen den Vorteil auf, dass es eine zuverlässige Benetzungserkennung ohne ortsaufgelöste Messung ermöglicht. Das erfindungsgemäße Verfahren ist daher prinzipiell unabhängig von der Form der Mess- bzw. Detektionsfläche, sofern diese homogen beleuchtet werden.

Die in der vorstehenden Beschreibung, den Ansprüchen und der Zeichnung offenbarten Merkmale der Erfindung können sowohl einzeln als auch in beliebiger Kombination für die Verwirklichung der Erfindung in ihren verschiedenen Ausführungsformen von Bedeutung sein.

## Patentansprüche

1. Verfahren zum Untersuchen einer Probe einer Flüssigkeit, insbesondere einer Probe einer Körperflüssigkeit, bei dem infolge eines Beladens eines Testsystems mit einer Probe einer Flüssigkeit die Probe der Flüssigkeit in eine Messzone (2) des Testsystems gelangt und sich in der Messzone (2) ausbreitet und bei dem ein die Ausbreitung der Probe der Flüssigkeit in der Messzone (2) charakterisierendes Füllmaß unter Verwendung einer photometrischen Füllmessung der Probe der Flüssigkeit in der Messzone (2) ermittelt wird, wobei die photometrische Füllmessung mit auf die Probe der Flüssigkeit in der Messzone (2) eingestrahltem Messlicht (5a) einer Messlichtwellenlänge ausgeführt wird, für die die Flüssigkeit bei Variation mindestens eines Flüssigkeitsparameters ein im wesentlichen gleich bleibendes optisches Verhalten aufweist, welches durch zumindest eine spektroskopischen Messgröße ausgewählt aus der folgenden Gruppe von spektroskopischen Messgrößen bestimmt wird: Absorption, Transmission, Remission und Fluoreszenz.

2. Verfahren nach Anspruch 1, **dadurch gekennzeichnet, dass** die Messzone (2) beim Ausbreiten der Probe der Flüssigkeit in der Messzone (2) durch die Flüssigkeit benetzt wird.

3. Verfahren nach Anspruch 1 oder 2, **dadurch gekennzeichnet, dass** die Messzone (2) beim Ausbreiten der Probe der Flüssigkeit in der Messzone (2) durch die Flüssigkeit befeuchtet wird.

4. Verfahren nach einem der vorangehenden Ansprüche, **dadurch gekennzeichnet, dass** die photometrische Füllmessung mit Messlicht (5a) einer Messlichtwellenlänge ausgeführt wird, für die die Flüssigkeit bei Variation der chemischen Zusammensetzung der Flüssigkeit lösbaren Verbindung ein im wesentlichen gleich bleibendes optisches Verhalten aufweist, welches durch zumindest eine spektroskopischen Messgröße ausgewählt aus der folgenden Gruppe von spektroskopischen Messgrößen bestimmt wird: Absorption, Transmission, Remission und Fluoreszenz.

5. Verfahren nach einem der vorangehenden Ansprüche, **dadurch gekennzeichnet, dass** die photometrische Füllmessung mit Messlicht (5a) einer Messlichtwellenlänge ausgeführt wird, für die die Flüssigkeit bei Variation der Konzentration einer in der Flüssigkeit lösbaren Verbindung ein im wesentlichen gleich bleibendes optisches Verhalten aufweist, welches durch zumindest eine spektroskopischen Messgröße ausgewählt aus der folgenden Gruppe von spektroskopischen Messgrößen bestimmt wird: Absorption, Transmission, Remission und Fluoreszenz.

6. Verfahren nach einem der vorangehenden Ansprüche, **dadurch gekennzeichnet, dass** die photometrische Füllmessung zeitaufgelöst ausgeführt wird.

7. Verfahren nach Anspruch 6, **dadurch gekennzeichnet, dass** ein zeitlicher Verlauf der zumindest einen spektroskopischen Messgröße gemessen wird.

8. Verfahren nach Anspruch 6 oder 7, **dadurch gekennzeichnet, dass** ein zeitlicher Verlauf für das Füllmaß ermittelt wird.

9. Verfahren nach einem der Ansprüche 6 bis 8, **dadurch gekennzeichnet, dass** das Füllmaß aus Messwerten für die zumindest eine spektroskopische Messgröße ermittelt wird, die zu einem benutzerdefinierbaren Zeitpunkt nach einem Beginn des Einstrahlens des Messlichtes mit der Messlichtwellenlänge gemessen werden.

10. Verfahren nach Anspruch 9, **dadurch gekennzeichnet, dass** als benutzerdefinierter Zeitpunkt ein Zeitpunkt gewählt wird, in dem die zumindest eine spektroskopische Messgröße einen Extremwert annimmt.

**11.** Verfahren nach einem der vorangehenden Ansprüche, **dadurch gekennzeichnet, dass** als Testsystem ein System verwendet wird, welches zumindest eine Testsystembauart ausgewählt aus der folgenden Gruppe von Testsystembauarten implementiert: Teststreifen, Testfeld, Testsystem mit einer Hohlraumstruktur zum Aufnehmen der Probe der Flüssigkeit und mikrofluidisches Testsystem.

**12.** Verfahren nach einem der vorangehenden Ansprüche, **dadurch gekennzeichnet, dass** eine Analysemessung zum Analysieren der Probe der Flüssigkeit ausgeführt wird, bei dem wahlweise ein Analyt in der Probe der Flüssigkeit bestimmt wird.

**13.** Verfahren nach Anspruch 12, **dadurch gekennzeichnet, dass** die Analysemessung eine Messung ausgewählt aus der folgenden Gruppe von Messungen umfasst: elektrochemische Messung und photometrische Messung.

**14.** Verfahren nach Anspruch 12 oder 13, **dadurch gekennzeichnet, dass** die Analysemessung in Abhängigkeit von einem Füllmaß-Datensignal gestartet wird, welches aus einer elektronisch auswertbaren Information über das ermittelte Füllmaß abgeleitet wird

**15.** Verfahren nach einem der Ansprüche 12 bis 14, **dadurch gekennzeichnet, dass** die Analysemessung gemäß zumindest einer Messverfahrensgestaltung ausgewählt aus der folgenden Gruppe von Messverfahrensgestaltungen ausgeführt wird: zumindest teilweise zeitlich überlappend mit der photometrischen Füllmessung, beginnend vor der photometrischen Füllmessung, beginnend nach der photometrischen Füllmessung, endend vor der photometrischen Füllmessung und endend nach der photometrischen Füllmessung.

**16.** Verfahren nach einem der Ansprüche 12 bis 15, **dadurch gekennzeichnet, dass** die Analysemessung in einer von der Messzone (2) beabstandeten Detektionszone (3) des Testsystems ausgeführt wird, die der Messzone (2) wahlweise nachgeschaltet ist.

EP 1 890 132 A1

7

6

5

4

6a

5a

8

3

2

1

Fig. 1

Fig. 2

Fig. 3

Fig. 4

Fig. 5

**Europäisches**
**Patentamt**

**EUROPÄISCHER RECHERCHENBERICHT**

Nummer der Anmeldung

EP 06 01 7021

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| D,Y | US 6 707 554 B1 (MILTNER KARL [DE] ET AL) 16. März 2004 (2004-03-16) * Spalte 2, Zeile 46 - Spalte 3, Zeile 4 * * Spalte 11, Zeile 18 - Zeile 53 * * Abbildungen 4,6,7 * | 1-16 | INV. G01N21/86 |
| Y | WO 03/023499 A2 (TECAN TRADING AG [CH]; BRAENDLE HANSJOERG [CH]; GRAETER MATTHIAS [CH]) 20. März 2003 (2003-03-20) * Seite 15, Zeile 29 - Zeile 32 * | 1-16 | |
| D,A | US 4 420 566 A (JESSOP THOMAS C [US] ET AL) 13. Dezember 1983 (1983-12-13) * Spalte 2, Zeile 11 - Zeile 43 * * Spalte 4, Zeile 14 - Spalte 5, Zeile 10 * * Spalte 6, Zeile 1 - Zeile 9 * * Spalte 6, Zeile 49 - Zeile 54 * * Abbildungen * | 1-16 | |
| A | EP 0 922 954 A2 (UMM ELECTRONICS INC [US]) 16. Juni 1999 (1999-06-16) * Absatz [0016] - Absatz [0017] * * Absatz [0030] * * Abbildung 6 * | 1-16 | RECHERCHIERTE SACHGEBIETE (IPC) G01N |

Der vorliegende Recherchenbericht wurde für alle Patentansprüche erstellt

| Recherchenort | Abschlußdatum der Recherche | Prüfer |
|---|---|---|
| Den Haag | 12. Januar 2007 | Krametz, Edeltraud |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
.............................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 06 01 7021

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

12-01-2007

| Im Recherchenbericht angeführtes Patentdokument | | Datum der Veröffentlichung | Mitglied(er) der Patentfamilie | | Datum der Veröffentlichung |
|---|---|---|---|---|---|
| US 6707554 | B1 | 16-03-2004 | DE | 19844500 A1 | 30-03-2000 |
| | | | WO | 0019185 A1 | 06-04-2000 |
| | | | EP | 1117989 A1 | 25-07-2001 |
| | | | JP | 2002525625 T | 13-08-2002 |
| | | | JP | 2005338101 A | 08-12-2005 |
| WO 03023499 | A2 | 20-03-2003 | AU | 2002337086 A1 | 24-03-2003 |
| US 4420566 | A | 13-12-1983 | KEINE | | |
| EP 0922954 | A2 | 16-06-1999 | US | 6069011 A | 30-05-2000 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6707554 B1

- US 4420566 A